# EUROPÄISCHE PATENTANMELDUNG

(11) **EP 0 881 400 A1**
(43) Veröffentlichungstag der Anmeldung: **02.12.1998**
(21) Anmeldenummer: 98109066.5
(22) Anmeldetag: 19.05.1998
(51) Int. Cl.: F16B 37/12, F16B 23/00

(54) **Befestigungsschraube, insbesondere Rohrschraube**

(30) Priorität: 26.05.1997 DE 29709213 U
(71) Anmelder: MiTek Industries GmbH, 63128 Dietzenbach (DE)
(72) Erfinder: Litze, Harald, 64823 Wiebelsbach (DE)
(74) Vertreter: Blumbach, Kramer & Partner GbR

(57) **Zusammenfassung**

Befestigungsschraube mit Schneidgewinde (3) und mit einer Gestaltung zum Drehantrieb. Eine passende Schraubenlänge wird durch Zuschneiden aus Gewindestangenmaterial 1 oder aus einzelnen Rohrstücken hergestellt, die aneinanderschraubbar sind. An der Befestigungsschraube kann ein Bohrkopf (10) angebracht werden. Der Drehantrieb besteht entweder aus einer Innenprofilierung 2 oder ein Drehantrieb (40) kann an dem Innenkonus 32 des endständigen Rohrstückes 20 angebracht werden.

## Beschreibung

Die Erfindung bezieht sich auf eine Befestigungsschraube nach dem dem Oberbegriff des Anspruches 1.

Eine derartige Befestigungsschraube in Form einer Schraubhülse ist aus EP 0.463.487 A1 bekannt. Die Schraubhülse ist zum Eindrehen in weiches Baumaterial, beispielsweise eine Gipswand geeignet und weist zu diesem Zweck eine angeformte Hülsenspitze als Vorbohrelement und ein äußeres Schraubgewinde auf, das sich mit ungefähr 2 Gängen über die Länge der zylindrischen Umfangsfläche der Hülse erstreckt und relativ weit auslandend ist. Am hinteren Ende der Schraubhülse ist ein Flansch angeformt, um sich an der Gipswand oder dergleichen anzulehnen. Im Inneren der Hülse sind Rippen und Einschnitte angeordnet, um ein Werkzeug zum Drehantrieb anzusetzen. Die Schraubhülse eignet sich nicht dazu, in Holz oder härtere Baumaterialien wie Beton oder Ziegel eingetrieben zu werden. Ferner ist es nicht möglich, unterschiedliche Längen des Befestigungselementes aus vorgefertigtem Material zu gewinnen.

Aus US-A 4 022 099 ist eine Befestigungsschraube bekannt, an die ein Schneidkopf angesetzt werden kann, der ein Gewinde in einer Durchgangsbohrung eines metallischen Werkstückes schneiden kann. Die Befestigungsschraube wird mit dem angesetzten Schneidkopf durch diese Durchgangsbohrung hindurch geschraubt und der Schneidkopf wird von der Befestigungsschraube abgenommen, nachdem die Schraube durch die Durchgangsbohrung hindurchgelangt ist. Das selbsttätige Schneiden auch der Bohrung in das Werkstück ist nicht vorgesehen. Die Verankerung in einem Sackloch ohne vorgeschnittenes Gewinde ist ebenfalls nicht möglich.

Die Befestigung von metallischen Werkstücken in einstellbarem Abstand mittels einer Schraube, die an den Enden Rechts- bzw. Links-Gewinde aufweist, ist nicht mehr neu (EP 0 191 245 A1). Das selbsttätige Eintreiben in Holz und die Einstellung des Abstandes der Holzbauteile voneinander ist daraus nicht bekannt.

Eine Holzschraube mit einer axialen Vertiefung zu schaffen, um sie mit einem geeigneten Werkzeug drehend anzutreiben, ist an sich bekannt (DE 296 08 334 U1, EP 0 558 831 B1). Eine Anpassung der Länge dieser Holzschrauben an aktuellen Bedarf ist nicht möglich.

Gewindestangen mit metrischem Gewinde sind im Handel erhältlich und können auf passende Länge abgeschnitten werden, um z. B. als Durchsteckschraube mit je einer Mutter am Ende verwendet zu werden. Mangels passender Antriebsmöglichkeit kann man dieses Prinzip nicht für Holzschraubgewinde verwenden, denn eine Holzschraube muß einen Abschnitt aufweisen, der mit einiger Kraft angetrieben wird, um die Holzschraube im Holz zu verankern.

Die Erfindung löst die Aufgabe, ein Spann- oder Befestigungselement für Holz, Holzwerkstoffe, Gips, Leichtbeton und/oder Normalbeton, Ziegel sowie andere mineralische Baumaterialien zu schaffen, dessen Länge dem jeweiligen Bedarf leicht angepaßt werden kann.

Die gestellte Aufgabe wird aufgrund der Merkmale des Anspruchs 1 gelöst und durch die weiteren Merkmale der Ansprüche ausgestaltet und weiterentwickelt.

Die Erfindung sieht zwei Möglichkeiten vor, die Länge der Befestigungsschraube dem jeweiligen Bedarf anzupassen. Entweder wird als Grundelement eine Art Gewindestange verwendet, von der ein passendes Stück abgeschnitten wird, oder die Befestigungsschraube wird aus einzelnen Ansatzstücken aufgebaut, die aneinander befestigt werden können. Die Befestigungseinrichtungen der Ansatzstücke untereinander eignen sich auch zum Anbringen eines Drehantriebes, der nach Gebrauch wieder gelöst wird. Im Falle der Ausbildung als Gewindestange wird der Antriebsteil in das Innere des rohrförmigen Befestigungselements gelegt. Deshalb kann dieses als Meterware bereitgestellt und in passende Stücke geschnitten werden, ohne daß die Antriebsmöglichkeit verloren geht. Das Eindringende wird zweckmäßigerweise angefast oder angespitzt. Es wird an den vorgesehenen Anwendungszweck angepaßtes Gewinde, beispielsweise als Holzgewinde, verwendet, das sich in die Bohrungswand von Holz oder Holzwerkstoff eingräbt, wie es bekannt ist. Durch entsprechende Ausbildung des Gewindes und geeignete Auswahl des Werkstoffs läßt sich die Rohrschraube auch in Bohrungen von Leichtbeton oder Normalbeton befestigen. Wegen des Rohrquerschnitts lassen sich mit der neuen Rohrschraube große Biegemomente aufnehmen. Ferner kann auch eine große Schubkraft übertragen werden.

Die neue Befestigungsschraube kann so ausgebildet werden, daß sie sich ihr Bohrungsloch selbst schneidet. Hierzu wird ein Bohrkopf an die Befestigungsschraube angesetzt, wobei dann das Rohrinnere für die Abfuhr des zerspanten Materials dienlich wird. Wenn die Befestigungsschraube durch das Werkstück durchgebohrt wird, kann der Bohrkopf mehrmals verwendet werden.

Die Befestigungsschraube kann auch als Spannelement verwendet werden, um zwei Holzteile zusammenzuziehen bzw. auseinanderzurücken, um beispielsweise einen Abstand genau einzustellen. Für diesen Anwendungsfall sind Abschnitte mit Links- und Rechtsgewinde vorgesehen. Zur Betätigung solcher kombinierter Links/Rechts-Gewinde kann es vorteilhaft sein, einen Vielkant am Außenumfang anzubringen, um eine zusätzliche Einstellmöglichkeit zur Verfügung zu haben.

Die Erfindung wird anhand der Zeichnung beschrieben. Dabei zeigt:
- Fig. 1: einen Querschnitt durch eine Rohrschraube,
- Fig. 2: eine Ansicht von der Seite zusammen mit einem Bohrkopf,
- Fig. 3: einen Abschnitt mit einem Rechts/Links-Gewinde,
- Fig. 4: ein Rohrstück, das an gleichartige Rohrstücke ansetzbar ist,
- Fig. 5: aneinander befestigte Rohrstücke,
- Fig. 6: eine vergrößerte Einzelheit aus Fig. 5 mit auseindergezogenen Teilen,
- Fig. 7: eine Seitenansicht einer zweiten Ausführungsform der Rohrschraube, längs weggebrochen,
- Fig. 8: eine dritte Ausführungsform der Rohrschraube, längs weggebrochen,
- Fig. 9: ein Drehantrieb, von der Seite gesehen und
- Fig. 10: den Drehantrieb von unten gesehen.

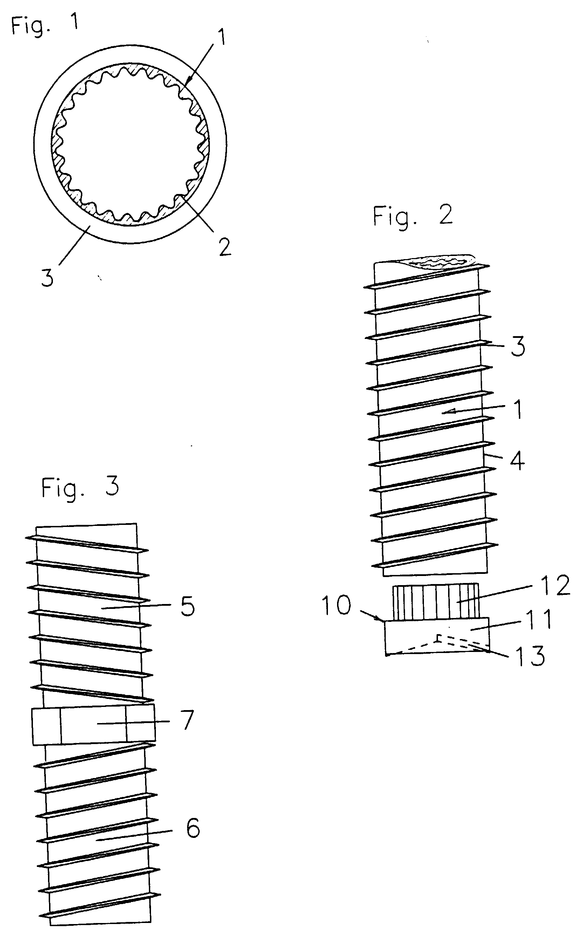

Die Rohrschraube nach Fig. 1 bis 3 weist einen länglichen, zylindrischen Körper 1 auf, der eine durchgehende Innenprofilierung 2 besitzt, wobei Wellenform bevorzugt wird.

Am Außenumfang des Grundkörpers 1 ist ein Gewinde 3 angebracht, das vorzugsweise einen dreieckförmigen Querschnitt aufweist, um sich in die vorgesehenen Materialien eingraben zu können. Zwischen den Gewindegängen ist viel Platz für eine Gewindenut 4 freigelassen, z.B. beträgt die Nutbreite viermal die Gangbreite.

Außer der Dreiecksform des Gewindequerschnitts kommen auch andere Formen in Betracht, hauptsächlich wenn die Befestigung in anderen Materialien als Holz beabsichtigt wird. Es versteht sich, daß das Rohrmaterial dem Anwendungszweck entsprechend gewählt wird. Die Herstellung des Gewindes erfolgt durch Walzen oder spanabhebende Bearbeitung.

Zur Herstellung des Rohres mit Innenprofil 2 eignet sich in besonderem Maße das Strangpreßverfahren. Als Materialien hierfür sind Aluminium und Messing besonders geeignet. Auch Stahl kann verarbeitet werden, insbesondere durch Rohrwalzen über einen profilierten Dorn.

Als Durchmesser der Rohrschrauben steht ein Durchmesserbereich von etwa 10 bis 30 mm im Vordergrund, es können aber auch größere Durchmesser verwendet werden.

Die neue Rohrschraube wird mit durchgehender Profilierung als Meterware hergestellt und gelagert. Bei aktuellem Bedarf werden Stücke passender Länge von der Meterware abgeschnitten und das Eindringende angefast oder angespitzt. Das Werkstück wird vorgebohrt und die Rohrschraube eingedreht, wobei man sich eines nicht dargestellten Werkzeuges bedient, das komplementär zum Innenumriß der Rohrschraube ausgebildet ist und daher an der Innenprofilierung 2 angreift, um die Rohrschraube zu drehen.

Zur Herstellung des Loches, in welchem die Rohrschraube zu befestigen ist, kann man sich auch eines Bohrkopfes 10 (Fig. 2) bedienen, der einen Schneidabschnitt 11 und einen Kupplungsabschnitt 12 aufweist. Am Schneidabschnitt sind radial oder schräg verlaufende Schneiden 13 vorgesehen, die benachbart zu Schlitzen angeordnet sind, die ins Innere des Bohrkopfes führen, der hohl ausgebildet ist. Der Kupplungsabschnitt 12 kann auf die Rohrschraube aufgesteckt werden, wodurch der Bohrkopf 10 zusammen mit der Rohrschraube antreibbar wird. Späne oder anderes Bohrgut wird durch das Innere des Bohrkopfes und der Rohrschraube nach außen geführt. Es versteht sich, daß in diesem Fall das Antriebswerkzeug hohl ist, ähnlich wie der Kupplungsabschnitt 12.

Wenn das Werkstück mit dem Bohrkopf und der Schraube durchgebohrt wird, kann der Bohrkopf 10 mehrmals verwendet werden. Andernfalls verbleibt er in der Sackbohrung im Werkstück.

Fig. 3 zeigt eine Ausführungsform, bei der ein Abschnitt 5 mit Linksgewinde an einen Abschnitt 6 mit Rechtsgewinde über einen Verbindungsabschnitt 7 anschließt. Am Verbindungsabschnitt 7 kann ein Vielkant angeformt sein. Ansonsten kann der Querschnitt dem der Fig. 1 entsprechen, d. h. Gewinde mit dreieckförmigem Querschnitt und einer relativ breiten Gewindenut. Mehrere Abschnitte 5, 6, 7 sind auf einer Gewindestange aufgereiht, und die einzelnen Schrauben werden von der Gewindestange abgeschnitten.

Die Rohrschraube mit den Abschnitten 5 und 6 kann dazu benutzt werden, zwei Bauteile gegeneinander zu pressen oder voneinander wegzurücken, um einen bestimmten Abstand einzustellen.

Zur Anpassung an verschiedene Materialien der Bauteile ist es möglich, von vornherein unterschiedliche Ausbildungen der Gewinde für die Abschnitte 5 und 6 vorzunehmen. Diese Unterschiede betreffen die Form des Gewindes und/oder deren Steigung. Für die Abstandseinstellung kann es günstig sein, den Verbindungsabschnitt 7 mit einem Gabelschlüssel zu erreichen, weshalb dort die Vielkantform nützlich ist.

Im Falle der Antriebsmöglichkeit über den Vielkantabschnitt 7 wird auch Vollmaterial für den zylindrischen Körper 1 in Betracht gezogen.

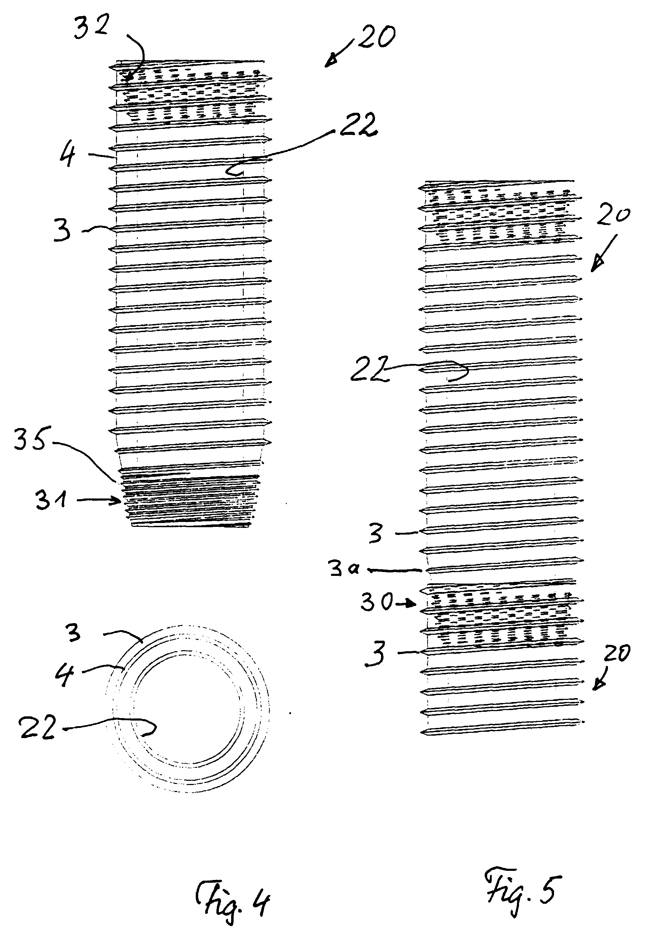

Fig. 4 zeigt ein rohrförmiges Ansatzstück oder Rohrschraubenstück 20, das mit gleichartigen Ansatzstücken zu einer kompletten Rohrschraube zusammengebaut werden kann, wie in Fig. 5 angedeutet. Zu diesem Zweck sind Anschlußbefestigungsmittel 30 vorgesehen, die in dem Ausführungsbeispiel als Außenschraubkonus 31 an dem einen Ende des Rohrstückes 20 und als Innenschraubkonus 32 am anderen Ende ausgebildet ist. Das Rohrstück 20 weist am äußeren Umfang Schneidgewinde 3 auf, das sich kontinuierlich fortsetzt, wenn angrenzende Rohrstücke 20 richtig zusammengesetzt sind. Dabei kann zwischen dem Schneidgewinde 3 von angrenzenden Rohrstücken 20 durchaus eine Lücke 3avorkommen, wenn nur die Schraubflächen benachbarter Rohrstücke 20 mathematisch ineinander geführt sind und ihre Steigung gleich ist. Dieses Ineinanderführen der Schneidgewinde wird dadurch erzielt, daß an dem Außenschraubkonus bzw. dem Innenschraubkonus jeweils Anschlagsflächen 33 bzw. 34 vorgesehen sind, wie am besten aus Fig. 6 ersichtlich. Wenn diese Flächen 33, 34 aufeinander treffen, hat das Schraubgewinde benachbarter Rohrstücke 20 den richtigen Abstand voneinander, bei dem die Spitzen des Schneidgewindes 3, entlang einer Mantellinie gesehen, gleichmäßigen Abstand voneinander aufweisen.

Im Gegensatz zu Ausführungsformen nach den Fig. 1 bis 3 ist die Innenwandung 22 des Rohrstückes 20 und damit auch der zusammengesetzten Befestigungsschraube glatt. Dadurch wird die Abfuhr von Spänen erleichtert; gegebenenfalls kann auch die Kernbohrung stehenbleiben, wenn der Bohrkopf 10 mit kranzförmigen Schneiden 13 gestaltet ist, die eine Kernbohrung umgeben. Der nicht dargestellte Bohrkopf für die Ausführungsform mit den Rohrstücken 20 kann beispielsweise auf dem Außenkonus 31 aufgeschraubt werden und verbleibt dort, wenn die Befestigungsschraube in einem herzustellenden Sackloch verbleiben soll, oder wird abgeschraubt, wenn die Befestigungsschraube durch das hergestellte Bohrloch hindurchgeschraubt wird.

Da die Anschlußbefestigungsmittel 30 relativ große Kräfte übertragen müssen, wird im Bereich des Außen- und Innenschraubkonus 31, 32 feineres Metallgewinde 35 bevorzugt, welches weniger steile Gewindeflanken aufweist und mehrgängig sein kann, etwa 3-gängig, wie im gezeichneten Ausführungsbeispiel.

Die erforderliche Tragfähigkeit der Schraubkonusse 31 und 32 kann auch dadurch erzielt werden, daß das Gewinde 37 dicker gemacht wird, wie in den Ausssführungsbeispielen der Fig. 7 und 8 dargestellt. Gleichzeitig kann ein Schneidgewinde 23 gewählt werden, das eine kontinuierliche Fortsetzung des Gewindes des Außenschraubkonus 31 darstellt, jedoch mit schmäleren Gewindegängen, um noch eine relativ breite Gewindenutbreite 24 freizulassen.

Die Ausführungsform nach Fig. 7 eignet sich besonders gut zum Einschrauben in vorgebohrte Löcher von Beton, während in der Ausführungsform nach Fig. 8 der Absatz 38 als Anschlagsfläche für einen Bohrkopf dienen kann, der auf den Außenkonus 31 aufzuschrauben ist.

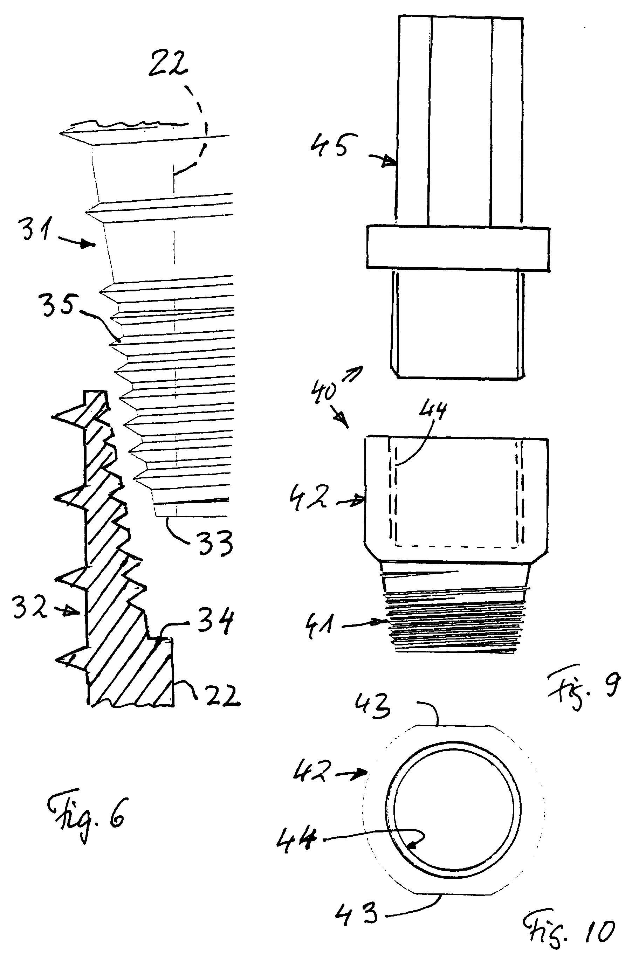

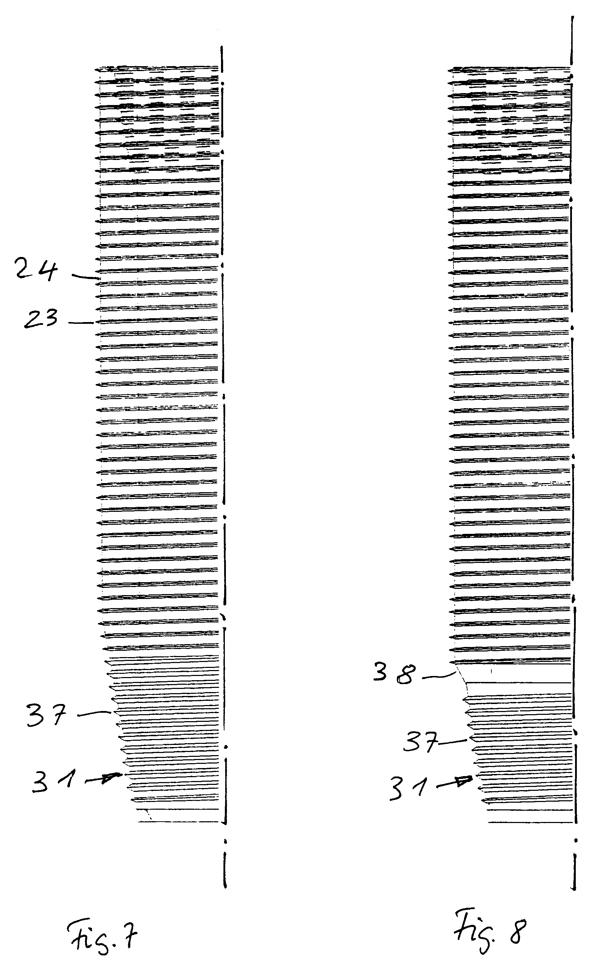

Fig. 9 und 10 zeigen einen Drehantrieb 40 zum Antrieb der aus Rohrstücken 20 aufgebauten Befestigungsschraube. Es ist ein Außenschraubkonus 41 vorgesehen, der in einen Innenschraubkonus 32 des Rohrstückes 20 hineingeschraubt werden kann. An dem Außenschraubkonus 41 ist ein Kopplungsstück 42 angebrahct, das am Außenumfang mit abflachungen 43 versehen ist, um es mit einem Gabelschlüssel antreiben oder festhalten zu können. Ferner ist noch eine Innenbohrung 44 vorgesehen, die zum Einschrauben eines Vierkantstückes 45 dienlich ist. Das Vielkantstück 45 wird drehend angetrieben, um die Befestigungsschraube in das Werkstück einzutreiben. Der Drehantrieb 40 kann von der Befestigungsschraube gelöst werden, beispielsweise indem mit einem Gabelschlüssel an den Abflachungen 43 angesetzt wird. Der dadurch freigekommene Innenschraubkonus 32 kann nunmehr zur Befestigung irgendwelcher anderer Bauteile verwendet werden, indem diese in den freigekommenen Innenschraubkonus eingeschraubt werden.

Für den Anwendungsfall der Fig. 3 können Ansatzstücke oder Rohrstücke 20 mit rechts- und linksgängigem Gewinde vorgesehen sein. Zur Kupplung solcher Rohrstücke mit unterschiedlichem Gewinde wird ein Halteabschnitt hergestellt, der mit rechts- und linksgängigem Konusgewinde an den Enden ausgestattet ist, um ebensolche Rohrstücke miteinander verbinden zu können.

Die Rohrschraubenstücke 20 werden durch Kaltfließpressen hergestellt, wobei man bei dem Lochungsvorgang gleichzeit das Gewinde walzt. Der Walzvorgang führt zu einem Vorwärts-, Rückwärts- und Seitwärts-Fließpressen bei der Herstellung des Rohres.

Statt einer glatten Innenwand 22 kann auch eine profilierte Innenwand verwendet werden, wie im Ausführungsbeispiel der Fig. 1 bis 3. Schließlich ist es auch möglich, Nuten an der Außenseite des Rohrstückes, beispielsweise an einem Ende dieses Rohrstückes anzubringen, um das Rohrstück drehend anzutreiben.

## Patentansprüche

1. Befestigungsschraube mit folgenden Merkmalen:
ein länglicher Grundkörper (1) ist mit Schneidgewinde (3) am Außenumfang versehen;
das Schneidgewinde (3) ist im Verhältnis zur Gewindenutbreite (4) schmal und eingrabend in Baumaterial ausgebildet;
der längliche Grundkörper (1) weist eine Gestaltung auf, die zum Drehantrieb mit einem Werkzeug geeignet ist;
gekennzeichnet durch folgende Ausbildung:
der längliche Grundkörper (1) ist auf passende Länge zuschneidbar und/oder mit Ansatzstücken (20) zusammensetzbar, die aneinander befestigt sind;
der Grundkörper (1) oder die Ansatzstücke (20) weisen eine Gestaltung auf, um einen Bohrkopf (10) an dem Befestigungselement anzubringen.

2. Befestigungsschraube nach Anspruch 1,
dadurch gekennzeichnet, daß der längliche Grundkörper(1) durch ein Rohr mit durchgehender Innenprofilierung (2) gebildet wird.

3. Befestigungsschraube Anspruch 1,
dadurch gekennzeichnet, daß der längliche Grundkörper durch rohrförmige Ansatzstücke (20) gebildet wird, die mit Anschlußbefestigungsmitteln (30) versehen sind

4. Befestigungsschraube nach Anspruch 3,
dadurch gekennzeichnet, daß die
Anschlußbefestigungsmittel (30) einen Außenschraubkonus (31) an einem Ende des Ansatzstückes (20) und einen Innenschraubkonus (32) am anderen Ende des Ansatzstückes (20) enthalten.

5. Befestigungsschraube nach Anspruch 4,
dadurch gekennzeichnet, daß Außenschraubkonus (32) und Innenschraubkonus (31) mit so angeordneten Anschlagsflächen (33,34) versehen sind, daß sich das Schneidgewinde (3) in aneinander angrenzenden rohrförmigen Ansatzstücken (20) hinsichtlich Schraubflächen und -steigung fortsetzen.

6. Befestigungsschraube nach einem der Ansprüche 3 - 5,
dadurch gekennzeichnet, daß die Innenwandung der rohrförmigen Ansatzstücke (20) glatt ist.

7. Befestigungsschraube nach nach einem der Ansprüche 3 - 5,
dadurch gekennzeichnet, daß die Außenwandung der rohrförmigen Ansatzstücke (20) zur Bildung eines Drehantriebes teilweise genutet ist.

8. Befestigungsschraube nach einem der Ansprpche 3 - 7,
dadurch gekennzeichnet, daß rohrförmige Ansatzstücke (20) mit rechtsgängigem Schneidgewinde (3) und Konusgewinde (31,32), solche mit linksgängigem Schneidgewinde und Konusgewinde sowie Übergangsstücke mit Halteabschnitt und jeweils rechts- und linksgängiem Konusgewinde an dem Ende vorgesehen sind.

9. Befestigungsschraube nach Anspruch 1 oder 2,
dadurch gekennzeichnet, daß das Schneidgewinde (3) entlang des gesamten zylindrischen Körpers (1) einheitlich ist.

10. Befestigungsschraube nach Anspruch 1 oder 2,
dadurch gekennzeichnet, daß das Schneidgewinde (3) wenigstens einen Bereich mit einem Linksgewindeabschnitt (5) und einem Rechtsgewindeabschnitt (6) aufweist.

11. Befestigungsschraube nach Anspruch 10,
dadurch gekennzeichnet, daß sich zwischen jedem Linksgewindeabschnitt (5) und Rechtsgewindeabschnitt (6) ein Halteabschnitt (7) befindet.

12. Befestigungsschraube nach einem der Ansprüche 1 - 11,
dadurch gekennzeichnet, daß der Bohrkopf (10) mit einem Schneidabschnitt (11) und einem rohrförmigen Kupplungsabschnitt (12) vorgesehen ist, der zur Momentübertragung zwischen Grundkörper (1) bzw. Ansatzstück (20) und Bohrkopf (10) ausgebildet ist.

13. Befestigungsschraube nach Anspruch 2,
dadurch gekennzeichnet, daß der Grundkörper (1) mit seiner Innenprofilierung (2) durch Strangpressen hergestellt ist.

14. Befestigungsschraube nach einem der Ansprüche 3 - 8,
ddddadurch gekennzeichnet, daß die rohrförmigen Ansatzstücke (20) durch Kaltfließpressen hergestellt sind.
